# FASCICULE DE BREVET EUROPEEN

(11) **EP 3 635 280 B1**
(45) Date de publication et mention de la délivrance du brevet: **20.04.2022**
(21) Numéro de dépôt: 18729734.6
(22) Date de dépôt: 17.05.2018
(51) Int. Cl.: F16H 63/30, F16H 63/34

(54) **SYSTEME DE COMMANDE D'UNE BOITE DE VITESSES DU TYPE MANUEL POUR UN VEHICULE AUTOMOBILE**
SYSTEM ZUR STEUERUNG EINES HANDSCHALTGETRIEBES FÜR EIN KRAFTFAHRZEUG
SYSTEM FOR CONTROLLING A MANUAL-TYPE GEARBOX FOR A MOTOR VEHICLE

(30) Priorité: 08.06.2017 FR 1755098
(43) Date de publication de la demande: 15.04.2020
(73) Titulaire: PSA Automobiles SA, 78300 Poissy (FR)
(72) Inventeur: MATIAS, Carlos, 95100 Argenteuil (FR); DURIEZ, Thomas, 59310 Orchies (FR)
(86) Numéro de dépôt international: PCT/FR2018/051189
(87) Numéro de publication internationale: WO 2018/224748

(56) Documents cités:
- EP-A1- 2 273 158
- EP-A2- 1 271 014
- FR-A1- 3 009 597

## Description

La présente invention concerne un système de commande d'une boîte de vitesses de véhicule automobile, ainsi qu'une boîte de vitesses et un véhicule automobile équipé d'une boîte de vitesses, comportant un tel système de commande.

Les boîtes de vitesses de véhicules automobiles à commande manuelle comportent généralement un arbre primaire relié par un embrayage au moteur thermique, et un arbre secondaire parallèle entraînant les roues motrices du véhicule par un différentiel répartissant le mouvement vers ces roues motrices.

Chaque rapport de vitesse de marche avant comporte un couple de pignon comprenant un pignon fixe porté par un des arbres, et un pignon libre porté par l'autre arbre, qui peut être engagé par un dispositif de synchronisation et de crabotage coulissant axialement sur l'arbre le portant.

Un type de boîte de vitesses connu, présenté notamment par le document EP-A1-1022495, réalise une marche arrière à partir de deux pignons fixes solidaires chacun d'un des deux arbres parallèles, et d'un pignon baladeur intermédiaire de marche arrière restant constamment en prise avec un des pignons fixes, et coulissant sur son axe pour engrener avec l'autre pignon fixe. Plusieures boîtes de vitesses, comme celles présentées par les documents FR 3009597 A1, EP 1271014 A2 et EP 2273158 A1 sont connues dans l'état de la technique antérieure.

En particulier il est connu de disposer un pignon récepteur sur le contour extérieur du manchon de synchronisation installé sur l'arbre secondaire entre les pignons libres du premier et du deuxième rapport de marche avant. Le pignon intermédiaire de marche arrière reste constamment en prise avec un pignon fixe de l'arbre primaire, et coulisse sur son axe pour s'engager sur le pignon récepteur de ce manchon de synchronisation.

Par ailleurs chaque manchon de synchronisation est commandé par une fourchette coulissant parallèlement à l'axe des arbres, comprenant deux bras engagés dans une gorge circulaire extérieure du manchon pour le déplacer.

Par la suite, par convention la direction des arbres primaire et secondaire est appelée direction axiale, la direction perpendiculaire est appelée direction transversale.

Un type de système de commande connu pour ces boîtes de vitesses comporte un arbre de commande disposé transversalement, qui coulisse suivant son axe pour sélectionner une fourchette en engageant un doigt relié à cet arbre dans une rainure centrale d'une crosse liée à la fourchette.

Ensuite l'arbre de commande est entraîné en rotation d'un côté ou de l'autre pour faire coulisser axialement la fourchette sélectionnée, et engager l'un des rapports de chaque côté du manchon déplacé.

Une clé d'interverrouillage disposée autour des crosses des fourchettes, comporte des bossages venant de chaque côté de ces crosses afin d'empêcher des coulissements.

La clé d'interverrouillage se déplace transversalement avec l'arbre de commande, pour disposer au niveau de la crosse de la fourchette sélectionnée un dégagement axial donnant l'espace nécessaire pour le coulissement de cette crosse, et disposer au niveau des autres crosses les bossages bloquant leurs coulissements afin d'éviter un passage simultané de plusieurs rapports de vitesse.

Toutefois ce type de commande de marche arrière peut poser des problèmes car le manchon de synchronisation recevant le couple du pignon intermédiaire de marche arrière, peut dans certains cas se déplacer axialement légèrement, en générant un petit frottement sur le synchroniseur se trouvant du côté de ce déplacement.

En particulier le système de dentures intérieures du manchon de synchronisation prévu pour transmettre le couple, comportant sur les côtés de ces dentures des angles formant un dispositif anti-lâcher empêchant le retrait de ce manchon lors du passage du couple, pour éviter un dégagement accidentel du rapport de vitesse engagé, peut causer ce décalage du manchon.

On obtient un léchage des cônes de synchronisation du côté du décalage du manchon, qui peut user le synchroniseur, le faire chauffer, et finir par le détruire.

La présente invention a notamment pour but d'éviter ces inconvénients de la technique antérieure.

Elle propose à cet effet un système de commande d'une boîte de vitesses pour un véhicule automobile, cette boîte de vitesses comprenant des manchons de synchronisation coulissant axialement, et un pignon intermédiaire de marche arrière coulissant axialement pour s'engager sur un pignon récepteur formé sur un manchon de synchronisation particulier, le système de commande comportant des fourchettes de commande des manchons, un doigt d'actionnement se déplaçant transversalement pour sélectionner une fourchette en s'engageant dans une rainure d'une crosse de cette fourchette, et comportant une clé d'interverrouillage déplacée transversalement avec le doigt d'actionnement, équipée de bossages prenant appui sur les côtés des crosses présentant dans la direction axiale un niveau principal, ce système de commande étant remarquable en ce que la crosse de la fourchette du manchon de synchronisation particulier comporte d'un côté un niveau additionnel décalé axialement par rapport au niveau principal, et en ce que la clé d'interverrouillage comporte un ergot supplémentaire venant en face de ce niveau additionnel décalé quand la marche arrière est engagée.

Un avantage de ce système de commande est que l'ergot supplémentaire prenant appui sur le niveau additionnel du manchon particulier quand la marche arrière est engagée, décale axialement légèrement ce manchon du côté opposé où il a tendance à se déplacer sous l'effet du couple transmis par le pignon de marche arrière.

On réalise de manière simple et économique, avec très peu de modifications du système de commande, un petit décalage axial du manchon particulier permettant d'éviter un léger frottement sur le synchroniseur disposé du côté où le manchon a tendance à se déplacer, ce qui évite son usure et sa destruction.

Le système de commande selon l'invention peut comporter de plus une ou plusieurs des caractéristiques suivantes, qui peuvent être combinées entre elles.

Avantageusement, le niveau principal est formé sur le côté des crosses à une extrémité de ces crosses, le niveau additionnel décalé étant sur la crosse le comportant, éloigné de cette extrémité.

Dans ce cas, avantageusement l'ergot supplémentaire s'ajoute sur un bossage de la clé d'interverrouillage, pour prolonger ce bossage.

De plus, la face arrière de l'ergot supplémentaire, opposée à sa face avant venant sur le niveau additionnel décalé, peut présenter une inclinaison.

En particulier, le niveau additionnel décalé peut être décalé axialement vers l'avant par rapport au niveau principal.

En particulier, le système de commande peut comporter un arbre de commande lié au doigt d'actionnement, qui est disposé transversalement.

L'invention a aussi pour objet une boîte de vitesses prévue pour un véhicule automobile, remarquable en ce qu'elle comporte un système de commande comprenant l'une quelconque des caractéristiques précédentes.

En particulier, l'ergot supplémentaire peut être par rapport à la crosse de la fourchette du premier et du deuxième rapport de marche avant, disposé du côté de l'engagement du deuxième rapport.

L'invention a de plus pour objet un véhicule automobile équipé d'une boîte de vitesses comportant un système de commande comprenant l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est une vue d'un système de commande selon l'invention ; et
- les figures 2 et 3 sont des vues de détail de ce système de commande.

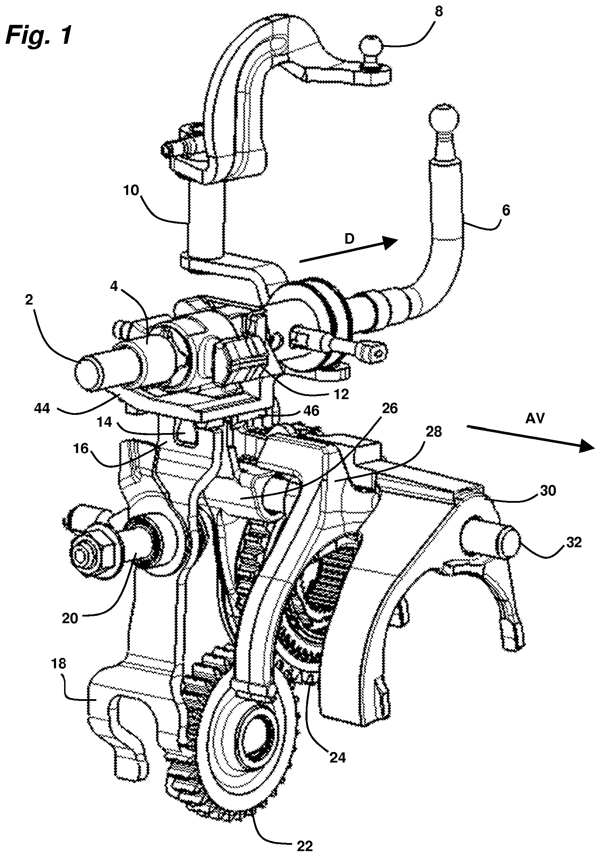

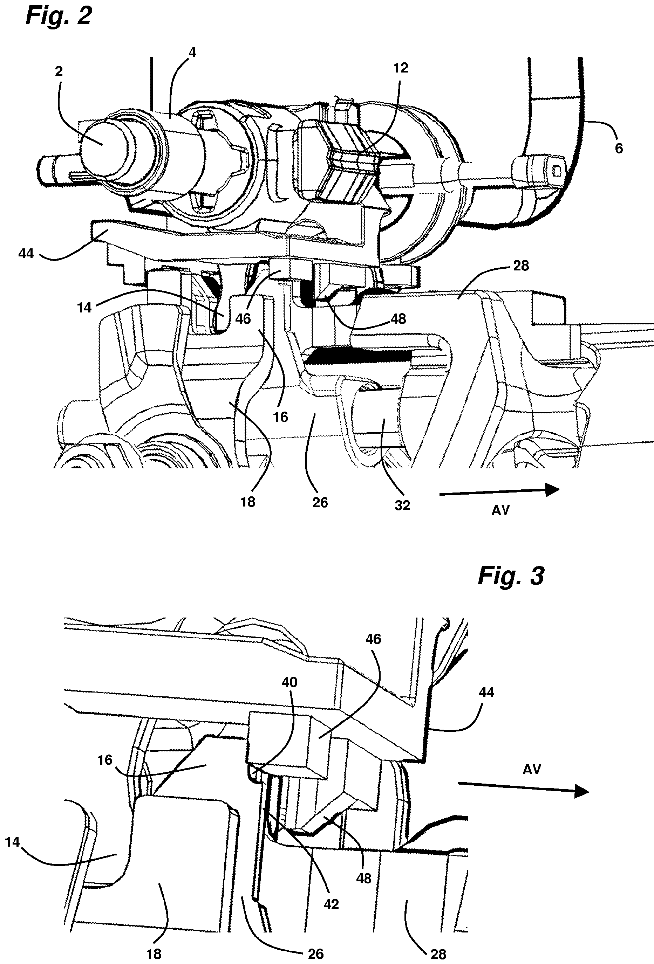

Les figures 1, 2 et 3 présentent un système de commande comportant un arbre de commande 2 disposé transversalement, pivotant et coulissant sur des paliers 4 fixés dans le carter de la boîte de vitesses, comportant du côté appelé par convention côté droit, indiqué par la flèche D, un bras coudé de commande 6 se terminant par une rotule permettant de faire pivoter cet arbre autour de son axe.

Un bras de sélection 8 monté sur un pivot vertical 10, entraîne un coulissement de sélection de l'arbre de commande 2 en le déplaçant suivant son axe.

Le système de commande de la boîte de vitesses comporte en partant du côté gauche, une fourchette de commande de la marche arrière 18 montée sur un pivot disposé transversalement 20, qui déplace axialement un pignon intermédiaire 22 de marche arrière pour l'engager sur un pignon extérieur 24 formé sur le contour du manchon de synchronisation du premier et du deuxième rapport.

Le système de commande comporte ensuite en se déplaçant vers la droite, une fourchette de commande du premier et du deuxième rapport 26, une fourchette de commande du troisième et du quatrième rapport 28, et une fourchette de commande du cinquième et du sixième rapport 30.

Les fourchettes de commande des rapports de marche avant 26, 28, 30 coulissent sur une tige disposée axialement 32 qui leurs sert de guidage.

La direction axiale de la boîte de vitesses comporte un côté appelé par convention côté avant, indiqué par la flèche « AV », qui est le côté opposé au moteur thermique.

La fourchette du rapport de marche arrière 18 et les trois fourchettes des rapports de marche avant 26, 28, 30, comportent chacune en partie supérieure une crosse 16 formant une plaque disposée verticalement dans la direction axiale, qui présente une rainure centrale tournée vers le haut.

L'arbre de commande 2 comporte un doigt 14 tourné vers le bas, qui est déplacé transversalement lors des mouvements de sélection de cet arbre en s'alignant sur une crosse 16 d'une fourchette de commande 18, 26, 28, 30, par un ajustement dans sa rainure centrale afin de sélectionner une fourchette.

Le mouvement de rotation de l'arbre de commande 2 d'un côté ou de l'autre, fait coulisser axialement la fourchette sélectionnée pour passer un rapport de vitesse.

Une rampe transversale 12 liée à l'arbre de commande 2 sur son côté, présente une rainure centrale recevant l'appui d'une bille poussée par un ressort, afin de maintenir au repos cet arbre de commande dans une position neutre médiane entre les passages d'un côté ou de l'autre.

Une clé d'interverrouillage 44 forme un cadre venant au-dessus des crosses 16 des fourchettes de commande 18, 26, 28, 30, se déplaçant transversalement avec l'arbre de commande 2, qui comporte dans la direction axiale un passage laissant coulisser une seule crosse 16 pour engager un rapport, les autres crosses étant retenus afin d'éviter le déplacement d'une autre fourchette engageant un autre rapport.

La crosse 16 de la fourchette du premier et du deuxième rapport 26 présente du côté avant, un bord étagé comprenant dans la direction axiale, à son extrémité supérieure un niveau principal 40, et en dessous un niveau additionnel 42 qui est plus en avant que le niveau principal.

La clé d'interverrouillage 44 comporte du côté avant, vers la gauche un bossage court 46 présentant une faible hauteur, prévu pour s'ajuster sur le niveau principal 40, et vers la droite un bossage long constitué par un ergot supplémentaire 48 venant en dessous d'un bossage court, prévu pour s'ajuster sur le niveau additionnel 42. La face arrière de l'ergot supplémentaire 48 opposée à la face avant venant sur le niveau additionnel 42, présente une inclinaison pour réduire le volume de matière additionnel.

Pour le passage du troisième au sixième rapport en déplaçant les fourchettes 28, 30 commandant ces rapports, la clé d'interverrouillage 44 va vers la droite, et le bossage court 46 vient en face de la fourchette de commande du premier et deuxième rapport 26, qui est calée vers l'avant par son niveau principal 40. Le manchon de synchronisation du premier et du deuxième rapport est normalement disposé dans sa position de repos, axialement au milieu de ces rapports.

Pour le passage de la marche arrière en déplaçant la fourchette de marche arrière 18, la clé d'interverrouillage 44 va vers la gauche, et le bossage long 48 cale vers l'avant la fourchette de commande du premier et deuxième rapport 26 en venant en appui sur son niveau additionnel 42.

Le niveau additionnel 42 étant décalé vers l'avant par rapport au niveau principal 40, le manchon de synchronisation du premier et du deuxième rapport est aussi légèrement décalé vers l'arrière, du côté opposé où le couple transmis par le pignon intermédiaire de marche arrière 22 a tendance à le pousser.

En particulier le couple appliqué par le pignon intermédiaire de marche arrière 22 peut tendre à déplacer le manchon de synchronisation du premier et du deuxième rapport vers ce deuxième rapport.

Avec une simple modification de la découpe des côtés de la crosse 16 d'une fourchette 26, et l'ajout de l'ergot sur le bossage long 48 de la clé d'interverrouillage 44, sans composant supplémentaire ni modification notable des coûts, on réalise de manière simple et efficace une protection des synchroniseurs commandés par cette fourchette.

## Revendications

1. - Système de commande d'une boîte de vitesses pour un véhicule automobile, cette boîte de vitesses comprenant des manchons de synchronisation coulissant axialement, et un pignon intermédiaire de marche arrière (22) coulissant axialement pour s'engager sur un pignon récepteur (24) formé sur un manchon de synchronisation particulier, le système de commande comportant des fourchettes de commande des manchons (18, 26, 28, 30), un doigt d'actionnement (14) se déplaçant transversalement pour sélectionner une fourchette (18, 26, 28, 30) en s'engageant dans une rainure d'une crosse (16) de cette fourchette, et comportant une clé d'interverrouillage (44) déplacée transversalement avec le doigt d'actionnement (14), équipée de bossages (46) prenant appui sur les côtés des crosses (16) présentant dans la direction axiale un niveau principal (40), **caractérisé en ce que** la crosse (16) de la fourchette du manchon de synchronisation particulier (26) comporte d'un côté un niveau additionnel (42) décalé axialement par rapport au niveau principal (40), et **en ce que** la clé d'interverrouillage (44) comporte un ergot supplémentaire (48) venant en face de ce niveau additionnel décalé (42) quand la marche arrière est engagée.

2. - Système de commande selon la revendication 1, **caractérisé en ce que** le niveau principal (40) est formé sur le côté des crosses (16) à une extrémité de ces crosses, le niveau additionnel décalé (42) étant sur la crosse (16) le comportant, éloigné de cette extrémité.

3. - Système de commande selon la revendication 2, **caractérisé en ce que** l'ergot supplémentaire (48) s'ajoute sur un bossage (46) de la clé d'interverrouillage (44), pour prolonger ce bossage (46).

4. - Système de commande selon la revendication 3, **caractérisé en ce que** la face arrière de l'ergot supplémentaire (48), opposée à sa face avant venant sur le niveau additionnel décalé (42), présente une inclinaison.

5. - Système de commande selon l'une quelconque des revendications précédentes, **caractérisé en ce que** le niveau additionnel décalé (42) est décalé axialement vers l'avant par rapport au niveau principal (40).

6. - Système de commande selon l'une quelconque des revendications précédentes, **caractérisé en ce qu'**il comporte un arbre de commande (2) lié au doigt d'actionnement (14), qui est disposé transversalement.

7. - Boîte de vitesses prévue pour un véhicule automobile, **caractérisée en ce qu'**elle comporte un système de commande selon l'une quelconque des revendications précédentes.

8. - Boîte de vitesses selon la revendication 7, **caractérisée en ce que** l'ergot supplémentaire (48) est par rapport à la crosse (16) de la fourchette du premier et du deuxième rapport de marche avant (26), disposé du côté de l'engagement du deuxième rapport.

9. - Véhicule automobile équipé d'une boîte de vitesses comportant un système de commande, **caractérisé en ce que** ce système de commande est selon l'une quelconque des revendications 1 à 6.

## Patentansprüche

1. - Steuersystem für ein Getriebe für ein Kraftfahrzeug, wobei dieses Getriebe axial verschiebbare Synchronisationsmuffen und ein axial verschiebbares Zwischenrückwärtszahnrad (22) umfasst, um mit einem Aufnahmeritzel (24) in Eingriff zu kommen, das an einer bestimmten Synchronisationsmuffe ausgebildet ist, wobei das Steuersystem umfasst Hülsensteuergabeln (18, 26, 28, 30), einen Betätigungsfinger (14), der sich quer bewegt, um eine Gabel (18, 26, 28, 30) auszuwählen, indem er in eine Nut eines Fußes (16) dieser Gabel eingreift, und umfassend einen quer mit dem Betätigungsfinger (14) bewegten Verriegelungsschlüssel (44), der mit Vorsprüngen (46) ausgestattet ist, die auf den Seiten der Stifte (16) aufliegen und in axialer Richtung eine Hauptebene (40) darstellen, **dadurch gekennzeichnet, dass** der Stift (16) der Gabel der jeweiligen Synchronmuffe (26) weist auf einer Seite eine zusätzliche Ebene (42) auf axial zur Hauptebene (40) angeordnet ist, und dass der Verriegelungskeil (44) eine zusätzliche Nase (48) aufweist, die dieser versetzten zusätzlichen Ebene (42) gegenüberliegt, wenn der Rückwärtsgang eingelegt ist.

2. - Steuersystem nach Anspruch 1, **dadurch gekennzeichnet, dass** die Hauptebene (40) seitlich der Stöcke (16) an einem Ende dieser Stöcke ausgebildet ist, wobei die abgesetzte Zusatzebene (42) an dem Stöcke (16) liegt es umfassen, weg von diesem Zweck.

3. - Steuersystem nach Anspruch 2, **dadurch gekennzeichnet, daß** die zusätzliche Nase (48) an einem Vorsprung (46) des Verriegelungskeils (44) angebracht ist, um diesen Vorsprung (46) zu verlängern.

4. - Steuersystem nach Anspruch 3, **dadurch gekennzeichnet, dass** die Rückseite der Zusatzlasche (48) gegenüber ihrer auf die versetzte Zusatzebene (42) kommenden Stirnseite eine Neigung aufweist.

5. - Steuersystem nach einem der vorhergehenden Ansprüche, **dadurch gekennzeichnet, dass** die versetzte Zusatzebene (42) gegenüber der Hauptebene (40) axial nach vorne versetzt ist.

6. - Steuersystem nach einem der vorhergehenden Ansprüche, **dadurch gekennzeichnet, dass** es einen mit der Steuerwelle (2) verbundenen Betätigungsfinger (14) umfasst, der quer angeordnet ist.

7. - Getriebe für ein Kraftfahrzeug, **dadurch gekennzeichnet, dass** es ein Steuersystem nach einem der vorhergehenden Ansprüche umfasst.

8. - Getriebe nach Anspruch 7, **dadurch gekennzeichnet, dass** die zusätzliche Nase (48) relativ zum Kolben (16) der Gabel des ersten und zweiten Vorwärtsgangs (26), auf der Seite der Verpflichtung zum zweiten Bericht angeordnet ist.

9. - Kraftfahrzeug, das mit einem Getriebe ausgestattet ist, das ein Steuersystem umfasst, **dadurch gekennzeichnet, dass** dieses Steuersystem einem der Ansprüche 1 bis 6 entspricht.

## Claims

1. - Control system for a gearbox for a motor vehicle, this gearbox comprising axially sliding synchronization sleeves, and an intermediate reverse gear (22) sliding axially to engage on a receiving pinion (24) formed on a particular synchronization sleeve, the control system comprising sleeve control forks (18, 26, 28, 30), an actuating finger (14) moving transversely to select a fork (18, 26, 28, 30) by engaging in a groove of a butt (16) of this fork, and comprising an interlocking key (44) moved transversely with the actuating finger (14), equipped with bosses (46) resting on the sides of the sticks (16) presenting in the axial direction a main level (40), **characterized in that** the stick (16) of the fork of the particular synchronization sleeve (26) comprises on one side a additional level (42) staggered axially with respect to the main level (40), and **in that** the interlocking key (44) comprises an additional lug (48) coming opposite this offset additional level (42) when the reverse gear is engaged.

2. - Control system according to claim 1, **characterized in that** the main level (40) is formed on the side of the sticks (16) at one end of these sticks, the offset additional level (42) being on the stick (16) comprising it, away from this end.

3. - Control system according to claim 2, **characterized in that** the additional lug (48) is added to a boss (46) of the interlocking key (44), to extend this boss (46).

4. - Control system according to claim 3, **characterized in that** the rear face of the additional lug (48), opposite to its front face coming on the offset additional level (42), has an inclination.

5. - Control system according to any one of the preceding claims, **characterized in that** the offset additional level (42) is offset axially forward relative to the main level (40).

6. - Control system according to any one of the preceding claims, **characterized in that** it comprises a control shaft (2) connected to the actuating finger (14), which is arranged transversely.

7. - Gearbox provided for a motor vehicle, **characterized in that** it comprises a control system according to any one of the preceding claims.

8. - Gearbox according to claim 7, **characterized in that** the additional lug (48) is relative to the butt (16) of the fork of the first and second forward ratio (26), arranged on the side of commitment to the second report.

9. - Motor vehicle equipped with a gearbox comprising a control system, **characterized in that** this control system is according to any one of claims 1 to 6.
